# EUROPÄISCHE PATENTSCHRIFT

(11) **EP 2 535 964 B1**
(45) Veröffentlichungstag und Bekanntmachung des Hinweises auf die Patenterteilung: **11.04.2018**
(21) Anmeldenummer: 11004912.9
(22) Anmeldetag: 16.06.2011
(51) Int. Cl.: H01M 2/18, H01M 10/04, H01M 10/12, H01M 2/16

(54) **Akkumulator**
Accumulator
Accumulateur

(43) Veröffentlichungstag der Anmeldung: 19.12.2012
(73) Patentinhaber: HOPPECKE Batterien GmbH & Co. KG, 59929 Brilon (DE)
(72) Erfinder: Kesper, Heinrich, 34508 Willingen (DE)
(74) Vertreter: Rausch Wanischeck-Bergmann Brinkmann

(56) Entgegenhaltungen:
- EP-A1- 0 029 017
- EP-A2- 1 184 917
- DE-A1- 3 207 070
- GB-A- 838 310

## Beschreibung

Die Erfindung betrifft einen Akkumulator mit einer plattenförmigen positive Elektrode und einer plattenförmigen negativen Elektrode, wobei zwischen den beiden Elektroden ein Separatorblatt und ein aus Polyethylen gebildetes Netzgitter angeordnet sind, wobei das Netzgitter als Abstandshalter dient und aus kreuzweise verlegten und miteinander verschweißten Fäden gebildet ist, wobei der Abstand zwischen zwei Elektroden durch die Dicke von Kreuzungspunkten des Netzgitters bestimmt ist, wobei die Kreuzungspunkte aus den miteinander verschweißten Fäden gebildet sind.

Akkumulatoren sind aus dem Stand der Technik an sich bekannt, auch in der besonderen Ausgestaltungsform als sogenannte Starterakkumulatoren oder Traktionsakkumulatoren. Eines gesonderten druckschriftlichen Nachweises bedarf es an dieser Stelle deshalb nicht.

Akkumulatoren der eingangs genannten Art verfügen über plattenförmig ausgebildete Elektroden, und zwar über positive Elektroden einerseits und negative Elektroden andererseits. Mehrere solcher Elektroden können zu einer gemeinsamen elektrochemischen Zelle miteinander kombiniert sein, wobei ein Akkumulator eine Vielzahl solcher elektromechanischen Zellen umfassen kann.

Eine elektromechanische Zelle stellt neben den Elektroden einen Elektrolyten bereit, der je nach Ausgestaltung des Akkumulators beispielsweise in Form von Schwefelsäure vorliegen kann. Innerhalb der Zelle sind wenigstens zwei Elektroden angeordnet, nämlich eine positive Elektrode sowie eine negative Elektrode, die im endmontierten Zustand vom Elektrolyten umspült sind.

Um im bestimmungsgemäßen Verwendungsfall einen Kurzschluss zwischen den Elektroden vermeiden zu können, kommen sogenannte Separatoren zum Einsatz. Diese sind im endfertig montierten Akkumulator zwischen benachbarten Elektroden angeordnet, und sie dienen dazu, die Elektroden des Akkumulators gegenseitig elektrisch zu isolieren. Ein solcher Separator kann aus Polyvinylchlorid (PVC) oder Polyethylen (PE) gebildet sein. Es ist die Verwendung eines solchen Separators in der Ausgestaltung als Blatt bevorzugt.

Um einen bestimmungsgemäßen Gebrauch des Akkumulators zu gewährleisten, ist hinsichtlich benachbarter Elektroden ein vorgebbarer Mindestabstand einzuhalten, damit eine hinreichende lonenbeweglichkeit gestattet ist. Zur Einhaltung dieses Abstandes sind aus dem Stand der Technik insbesondere aus PVC gefertigte Separatoren bekannt geworden, die über einstückig ausgebildete Rippen verfügen, die im endmontierten Zustand des Akkumulators als Abstandshalter zwischen zwei benachbarten Elektroden dienen.

Diese aus dem Stand der Technik bekannt gewordenen Separatoren erfüllen mithin nicht nur die Aufgabe der elektrischen Isolation, sie dienen dank der Rippenausgestaltung zugleich auch als Abstandshalter.

Obgleich sich Separatoren dieser Bauart im alltäglichen Praxiseinsatz bewährt haben, sind sie nicht frei von Nachteilen. So hat sich insbesondere die Herstellung als äußerst aufwendig und kompliziert herausgestellt. Im Ergebnis ist die Herstellung derartiger Separatoren äußerst kostenaufwendig. Diese hohen Herstellungskosten ergeben sich nicht zuletzt aufgrund der Rippenausgestaltung. Im Übrigen bedarf es zur Herstellung groß angelegter Maschinen, die in Abhängigkeit der späteren Akkumulatorbauformen je nach gewünschter Rippenausgestaltung der Umrüstung bedürfen. Mit einer solchen Umrüstung ist eine Unterbrechung der Herstellung verbunden, was die Produktionskosten ebenfalls ansteigen lässt. Hinzu kommt, dass die Rippen in ihrer Ausgestaltung eine bestimmte Rippenhöhe nicht übersteigen dürfen, weil ansonsten die Gefahr eines Rippenbruchs besteht. Die aus dem Stand der Technik vorbekannten Rippenseparatoren können deshalb nur bis zu einem bestimmten Abstand zwischen zwei benachbarten Elektroden zum Einsatz kommen.

Um den vorerläuterten Problemen zu begegnen, ist es aus dem Stand der Technik gemäß der EP 2 312 673 A1 bereits bekannt geworden, rippenfreie Separatoren zu verwenden. Zur Abstandsdefinition zwischen zwei benachbarten Elektroden kommt in Ergänzung zum rippenlos ausgestalteten Separatorblatt ein Netzschlauch zum Einsatz. Es ist dabei bevorzugt, dass das Separatorblatt als Teil einer Separatortasche ausgebildet ist, die im endmontierten Zustand die negative Elektrode aufnimmt. Die positive Elektrode ist im endmontierten Zustand indes vom Netzschlauch aufgenommen.

Der Netzschlauch ist aus einzelnen Netzschlauchfäden gebildet, die kreuzweise verlegt und miteinander verschweißt sind. Dabei bilden die Netzschlauch-Fäden Kreuzungspunkte aus, in welchen Kreuzungspunkten die Fäden miteinander verschweißt sind. Die Dicke der Kreuzungspunkte kann herstellerseitig eingestellt werden und bestimmt den Abstand zwischen zwei benachbarten Elektroden des späteren Akkumulators.

Die EP 2 312 673 A1 schlägt demnach in Abkehr zum vorerläuterten Stand der Technik vor, die elektrische Isolation einerseits sowie die Abstandsanordnung andererseits funktional voneinander zu trennen und anstelle eines einstückig ausgebildeten und mit Rippen ausgerüsteten Separators ein rippenfreies Separatorblatt einerseits und einen Netzschlauch andererseits zu verwenden. Dabei dient das Separatorblatt der elektrischen Isolation, und das Netzgitter dient als Abstandshalter.

Die EP 2 312 673 A1 betrifft einen gattungsgemäßen Stand der Technik.

Ein weiterer Stand der Technik ist aus der GB 838,310 A, aus der EP 1 184 917 A2 und aus der DE 32 07 070 A1 bekannt geworden.

Die GB 838,310 A beschreibt unter anderem eine getaschte Elektrodenplatte, die mehrschichtig aufgebaut ist und über einen Separator verfügen kann, der zu Verstärkungszwecken mit einem Netz ausgerüstet sein kann. Dieses Netz kann aus Polyesterfasern gebildet sein.

Die EP 1 184 917 A2 betrifft einen mehrschichtig aufgebauten Separator für einen Akkumulator mit nicht wässrigem Elektrolyt. Als eine Schicht ist ein Abstandshalter vorgesehen, der auch als Netz ausgebildet sein kann. Dabei ist die Dicke des Abstandshalters so dünn wie möglich auszubilden, vorzugsweise unter 5 µm.

Die DE 32 07 070 A1 betrifft ein Verfahren sowie eine Vorrichtung zum Eintaschen von Platten für Starterbatterien, wobei dieses Verfahren vorsieht, dass aus einer Plattenzugabe auf ein Transportband abgelegte Platten ober- wie unterseitig mit einem jeweils von einer Separatorbandrolle stammenden Separatorband belegt werden. Mittels einer Schweißwalze erfolgt eine Verschweißung quer zur Transportbandrichtung und in einem abschließenden Verfahrensschritt wird mittels einer Stanze eine Auftrennung mitten entlang einer Schweißnaht durchgeführt, so dass sich im Ergebnis abgestanzte Taschenplatten ergeben.

Es ist ausgehend vom vorbeschriebenen Stand der Technik die **Aufgabe** der Erfindung, einen in gattungsgemäßer Weise ausgebildeten Akkumulator noch weiter zu verbessern, insbesondere mit Blick auf seine Herstellung.

Zur **Lösung** dieser Aufgabe wird mit der Erfindung ein Akkumulator mit den Merkmalen nach Anspruch 1 vorgeschlagen. Ferner wird ein Herstellungsverfahren mit den Merkmalen nach Anspruch 8 vorgeschlagen.

Mit der erfindungsgemäßen Ausgestaltung wird im Unterschied zur vorbekannten Lehre nach der EP 2 312 673 A1 vorgeschlagen, dass das Netzgitter nicht als Netzschlauch sondern als Flächenware nach Art eines Blattes ausgebildet ist.

Das erfindungsgemäß als Flächenware ausgebildete Netzgitter kann im Zuge eines Herstellungsprozesses in einfacher Weise zwischen zwei zu beabstandende Elektroden eingebracht werden. Das Einbringen einer Elektrode in ein als Schlauch ausgebildetes Netzgitter ist insofern nicht weiter erforderlich. Die Funktion des Netzgitters ist gegenüber dem Stand der Technik unverändert. Es dient im endfertig montierten Zustand des Akkumulators als Abstandshalter zwischen zwei benachbarten Elektroden. Die Herstellung vereinfacht sich allerdings in vorteilhafter Weise aufgrund der erfindungsgemäßen Ausgestaltung des Netzgitters als Flächenware. Dabei hat das Netzgitter nach der Erfindung eine Ausgestaltung nach Art eines Blattes, das in seinen geometrischen Abmessungen in etwa denen einer Elektrode entspricht. Bevorzugterweise ist das Netzgitter in seiner flächenhaften Ausgestaltung etwas geringer dimensioniert als die im endmontierten Zustand des Akkumulators voneinander zu beabstandenden Elektroden. Aber auch eine flächenmäßig gleichgroße Ausgestaltung von Netzgitter und Elektrode ist selbstverständlich denkbar.

Das Netzgitter besteht bevorzugterweise aus Fäden aus Polyethylen. Die einzelnen Fäden sind kreuzweise miteinander verlegt und in ihren Berührungspunkten miteinander verschweißt, wodurch Kreuzungspunkte entstehen. Diese Kreuzungspunkte weisen eine Dicke auf, die maximal dem doppelten Fadendurchmesser entspricht. Durch entsprechende Krafteinwirkung beim Schweißvorgang kann die Dicke der Kreuzungspunkte herstellerseitig variiert und eingestellt werden, so dass nahezu beliebige Kreuzungspunktdicken ausgebildet werden können. Im Ergebnis kann ein Netzgitter zur Verfügung gestellt werden, das im endmontierten Zustand des Akkumulators für den gewünschten Abstand zwischen zwei benachbarten Elektroden sorgt. Dabei bemisst sich der Abstand zwischen zwei Elektrodenplatten aus der Dicke des Separatorblattes und der Dicke des Netzgitters, welche Dicke durch die Kreuzungspunkte definiert ist. Der Abstand zwischen zwei Elektroden beträgt bevorzugterweise beispielsweise 1,8mm. Das Separatorblatt hat eine Dicke von zum Beispiel ca. 0,35 mm. Dementsprechend werden durch das Netzgitter Kreuzungspunkte mit einer Dicke von 1,45 mm zur Verfügung gestellt, so dass sich im endmontierten Zustand unter Hinzunahme der Dicke des Separatorblattes eine Gesamtdicke, das heißt ein Gesamtabstand zwischen den Elektroden von 1,8 mm einstellt.

Die Verwendung eines Netzgitters hat im Unterschied zu einstückig mit dem Separatorblatt ausgebildeten Rippen den Vorteil, dass eine erhebliche Materialeinsparung erreicht ist. So erlaubt das Netzgitter eine vergleichsweise grobmaschige Ausgestaltung, wobei eine sichere Abstandshaltung durch die Kreuzungspunkte des Netzgitters gewährleistet ist. Darüber hinaus kann das Netzgitter in seiner Dicke nahezu beliebig ausgebildet werden, so dass individuellen Wünschen vollends Rechnung getragen werden kann.

Die erfindungsgemäße Ausgestaltung des Netzgitters als Flächenware bietet gegenüber der aus dem Stand der Technik bekannten Ausgestaltung des Netzgitters als Netzschlauch zudem den Vorteil, dass eine Verbindung des Netzgitters mit dem Separatorblatt ermöglicht ist. Es wird deshalb gemäß einem weiteren Merkmal der Erfindung vorgeschlagen, dass das Netzgitter mit dem Separatorblatt verbunden, vorzugsweise verklebt ist. Gemäß dieser Ausgestaltung kommt also ein Separatorblatt zum Einsatz, das auf einer seiner Großflächen mit einem Netzgitter ausgerüstet ist. Dabei ist das Netzgitter mit dem Separatorblatt verbunden, was durch Verkleben oder Verschweißen erreicht sein kann. Ein Verkleben von Netzgitter und Separatorblatt ist indes bevorzugt.

Das auf diese Weise mit einem Netzgitter ausgerüstete Separatorblatt kann in an sich bekannter Weise zur Ausgestaltung von Separatortaschen zur Aufnahme einer Elektrode, insbesondere einer negativen Elektrode verwendet werden. In jedem Fall ist eine einstückige Ausgestaltung von Separatorblatt und Netzgitter gegeben, die es im weiteren Herstellungsprozess ermöglicht, dass mit dem Netzgitter bereits vorkonfektionierte beziehungsweise vorausgerüstete Separatorblatt zwischen zwei Elektroden anzuordnen, wobei es des zusätzlichen Verfahrensschrittes der Anordnung eines Netzgitters nicht bedarf. Dieses ist bereits zusammen mit dem Separatorblatt zwischen zwei Elektroden zur Beabstandung derselben eingebracht, da es mit dem Separatorblatt bevorzugterweise durch Verkleben einstückig ausgebildet ist.

Die erfindungsgemäße Ausgestaltung ermöglicht es mithin, das Verfahren zur Herstellung eines Akkumulators noch weiter zu vereinfachen und insbesondere zu beschleunigen, was die Herstellkosten in vorteilhafter Weise weiter sinken lässt.

Das Separatorblatt kann gemäß einem weiteren Merkmal der Erfindung auf einer seiner Großflächen strukturiert ausgebildet sein. Diese Strukturierung dient dabei allerdings nicht im Sinne vorbekannter Rippenseparatoren als Abstandshalter zwischen zwei benachbarten Elektroden. Die Strukturierung ist vielmehr vorgesehen, um den bevorzugterweise als Separatorblatt ausgebildeten Separator eine gewisse Festigkeit und Formstabilität zu verleihen. Wellenbildungen, die beispielsweise in Folge eines Verklebens des Separatorblatts mit dem Netzgitter auftreten können, lassen sich so wirkungsvoll unterbinden. Darüber hinaus kann eine Separatorblattstrukturierung als Markierungshilfe für die Positionierung des damit zu verklebenden Netzgitters dienen.

Das Netzgitter kann gemäß einem weiteren Merkmal der Erfindung als Teil eines Ärmels ausgebildet sein, in welchem die eine der beiden Elektroden, vorzugsweise die positive Elektrode im endmontierten Zustand angeordnet ist. Ein solcher Ärmel verfügt über zwei nach Art einer Flächenware ausgebildeten Netzgitter und ermöglicht die elektrische Isolation zu beiden Großoberflächen der vom Ärmel aufgenommenen Elektrode.

Das Separatorblatt ist vorzugsweise aus Polyethylen gebildet. Als Material für das Separatorblatt kommen aber Phenolharz und PVC in Betracht. Die Verwendung von Polyethylen ist indes insbesondere dann bevorzugt, wenn die Elektroden getascht ausgebildet sind, d. h. das Separatorblatt Teil einer Separatortasche ist.

Das Separatorblatt kann gemäß einem weiteren Merkmal der Erfindung Teil einer Separatortasche sein, in der die eine der beiden Elektroden, vorzugsweise die negative Elektrode angeordnet ist. Die Ausbildung einer solchen Tasche hat insbesondere produktionstechnische Vorteile, da eine vereinfachte und schnelle Herstellung einer beidseitig durch Separatormaterial isolierte Elektrode möglich ist.

Mit der Erfindung wird desweiteren ein Verfahren zur Herstellung eines Akkumulators vorgeschlagen, bei dem die plattenförmigen negativen Elektroden getascht ausgebildet werden, zu welchem Zweck die Elektroden in einem ersten Schritt oberseitig und unterseitig der jeweiligen Großoberfläche mit einem endlos ausgebildeten Separatorblatt belegt werden, bei dem die Separatorblätter in einem zweiten Schritt entlang der Elektroden in Längsrichtung derselben verschweißt werden und bei dem anschließend in einem dritten Schritt eine Ablängung der Separatorblätter und Verschweißung entlang der Ablängungskante erfolgt.

Gemäß dieser Verfahrensweise wird ein erstes endlos ausgebildetes Separatorblatt und ein zweites endlos ausgebildetes Separatorblatt benachbart zueinander geführt. Zwischen den beiden endlosen Separatorblättern sind die negativen Elektroden des späteren Akkumulators angeordnet. In Längsrichtung dieser Elektroden findet eine Verschweißung der Separatorblätter statt, so dass mit Bezug auf die spätere Taschenausgestaltung eine erste Schweißnaht links und eine zweite Schweißnaht rechts ausgebildet werden. Es erfolgt sodann eine Ablängung der beiden miteinander verschweißten Separatorblätter, und zwar entlang einer mit Bezug auf die spätere Taschenform unteren Randkante. Bezüglich dieser Kante findet dann ebenfalls eine Verschweißung statt, so dass in der Konsequenz eine einseitig offene Separatortasche ausgebildet ist, wobei die beiden die Taschen ausbildenden Separatorblätter die negative Elektrode zwischen sich aufnehmen.

In einem vorangegangenen Verfahrensschritt kann gemäß einem weiteren Merkmal der Erfindung vorgesehen sein, dass ein Netzgitter mit einem der beiden Separatorblätter verbunden, vorzugsweise verklebt wird. Die vorbeschriebene Taschenausgestaltung erfolgt sodann mit endlos ausgebildeten Separatorblättern, von denen wenigstens eines auf seiner die Außenoberfläche der späteren Tasche bereitstellenden Großoberfläche ein Netzgitter trägt.

Alternativ zur vorbeschriebenen Verfahrensweise kann auch vorgesehen sein, zunächst in der schon vorbeschriebenen Weise die Separatortasche auszugestalten, wobei dann in einem nachfolgenden Verfahrensschritt das Netzgitter auf die fertig gestellte Tasche zumindest einseitig aufgebracht und verklebt wird.

Gemäß beider Verfahrensalternativen kann auch eine Ausgestaltung vorgesehen sein, dergemäß die spätere Separatortasche auf beiden Seiten jeweils mit einem Netzgitter ausgerüstet ist.

Weitere Merkmale und Vorteile der Erfindung ergeben sich aus der nachfolgenden Beschreibung anhand der Figuren. Dabei zeigen
- Fig. 1: in schematischer Schnittdarstellung einen Akkumulator nach der Erfindung;
- Fig. 2: in schematischer Draufsicht eine negative Elektrode eines Akkumulators nach der Erfindung und
- Fig. 3: in schematischer Darstellung die Durchführung des erfindungsgemäßen Verfahrens.

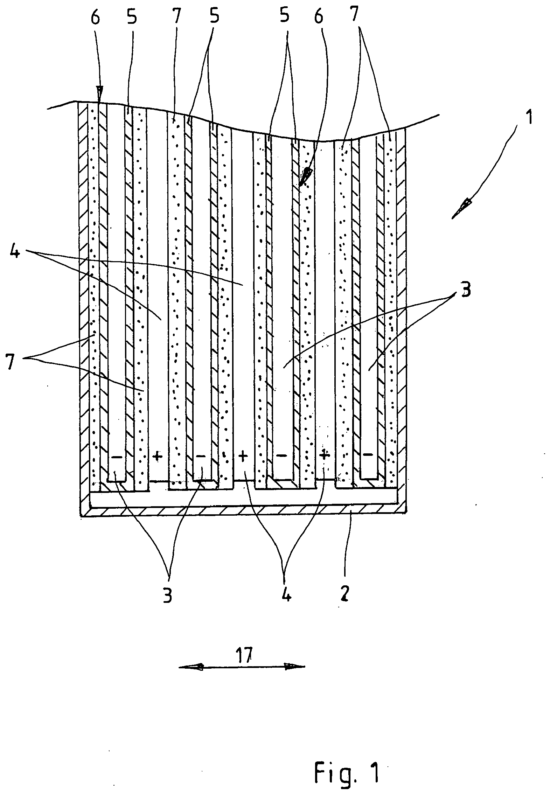

Fig. 1 lässt in schematischer, teilgeschnittener Seitenansicht eine elektrochemische Zelle eines Akkumulators 1 erkennen. Anstelle nur einer Zelle kann ein Akkumulator 1 auch über eine Mehrzahl solcher Zellen verfügen, wobei der vereinfachten Darstellung wegen nur eine Zelle in Fig.1 dargestellt ist.

Wie Fig. 1 erkennen lässt, verfügt die elektrochemische Zelle des Akkumulators 1 über eine Mehrzahl von negativen Elektroden 3 und positiven Elektroden 4, die von einem Gehäuse 2 aufgenommen und von einem in den Fign. nicht näher dargestellten Elektrolyten umspült sind. Die gezeigte Zelle verfügt über insgesamt sieben Elektroden, wobei vier negative Elektroden 3 und drei positive Elektroden 4 vorgesehen sind.

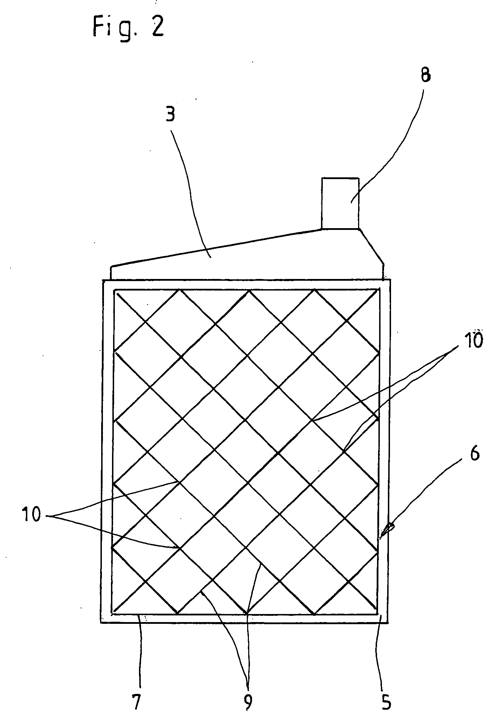

Die negativen Elektroden 3 sind getascht ausgebildet, das heißt innerhalb einer Separatortasche 6 angeordnet. Dabei verfügt eine Separatortasche 6 über zwei Separatorblätter 5, die - wie insbesondere die Darstellung nach Fig. 2 erkennen lässt - den großen Oberflächen der plattenförmigen Elektroden zugeordnet sind. Dabei dient eine Separatortasche 6 der elektrischen Isolation der zugehörigen negativen Elektrodenplatte 3 gegenüber zwei benachbarten positiven Elektroden 4, wie dies der Darstellung nach Fig. 1 zu entnehmen ist. Die jeweils randseitigen Elektroden 3, das heißt die mit Bezug auf die Zeichnungsebene nach Fig. 1 linke Elektrode 3 einerseits und rechte Elektrode 3 andererseits liegen einseitig jeweils am Gehäuse 2 an.

Zwischen zwei Elektroden 3 und 4 ist im endmontierten Zustand zudem ein Netzgitter 7 ausgebildet. Ein solches Netzgitter 7 verfügt über kreuzweise verlegte Fäden 9, die in ihren Berührungspunkten miteinander verschweißt sind, wodurch Kreuzungspunkte 10 ausgebildet sind. Die Dicke der Kreuzungspunkte 10 in Dickenrichtung 17 bestimmt den Abstand zwischen zwei Elektroden 3 und 4 in Dickenrichtung 17. Je nach Krafteinwirkung während des Schweißvorganges kann die Dicke der Kreuzungspunkte 10 in Dickenrichtung 17 eingestellt werden.

Der Abstand zwischen zwei benachbarten Elektroden 3 und 4 beträgt beispielsweise 1,8 mm. Das Separatorblatt 5 hat bevorzugterweise eine Dicke von z. B. 0,35 mm. Dementsprechend weisen die Kreuzungspunkte 10 des Netzgitters 7 eine Dicke in Dickenrichtung 17 von 1,45 mm auf.

Wie die Darstellung nach Fig. 2 erkennen lässt, ist die mit einer Fahne 8 zum elektrischen Zusammenschluss ausgerüstete Elektrode 3 in die aus zwei Separatorblättern 5 gebildete Separatortasche 6 eingesetzt. Das Netzgitter 7 ist als Flächenware ausgebildet und mit der Separatortasche 6 einstückig durch Verkleben ausgebildet. Dabei ist das Netzgitter 7 in seiner geometrischen Abmessung bevorzugterweise etwas kleiner als die Separatortasche 6 beziehungsweise das von der Separatortasche 6 bereitgestellte Separatorblatt 5 ausgebildet. Natürlich kann auch eine gleichgroße Ausgestaltung von Separatorblatt 5 und Netzgitter 7 gewählt werden.

Wie die Darstellung nach Fig. 1 erkennen lässt, ist eine jede Separatortasche 6 hinsichtlich ihrer großen Oberflächen jeweils mit einem Netzgitter 7 bestückt. Alternativ zu dieser Ausgestaltung kann auch vorgesehen sein, dass die beiden jeweils äußeren und mit dem Gehäuse 2 in Kontakt stehenden Elektroden 3 nur innenseitig mit einem solchen Netzgitter 7 ausgerüstet sind, das heißt die gehäuseseitigen Separatorblätter 5 der Separatortaschen 6 dieser Elektroden nicht mit einem Netzgitter 7 ausgestattet sind.

Die beidseitige Ausrüstung einer Separatortasche 6 mit einem Netzgitter 7 kann aus produktionstechnischen Gründen von Vorteil sein. Andererseits kann es aus Platzgründen innerhalb des Gehäuses 2 vorteilhaft sein, die äußeren Separatortaschen 6 hinsichtlich ihrer gehäuseseitigen Großoberflächen nicht mit einem solchen Netzgitter 7 auszurüsten.

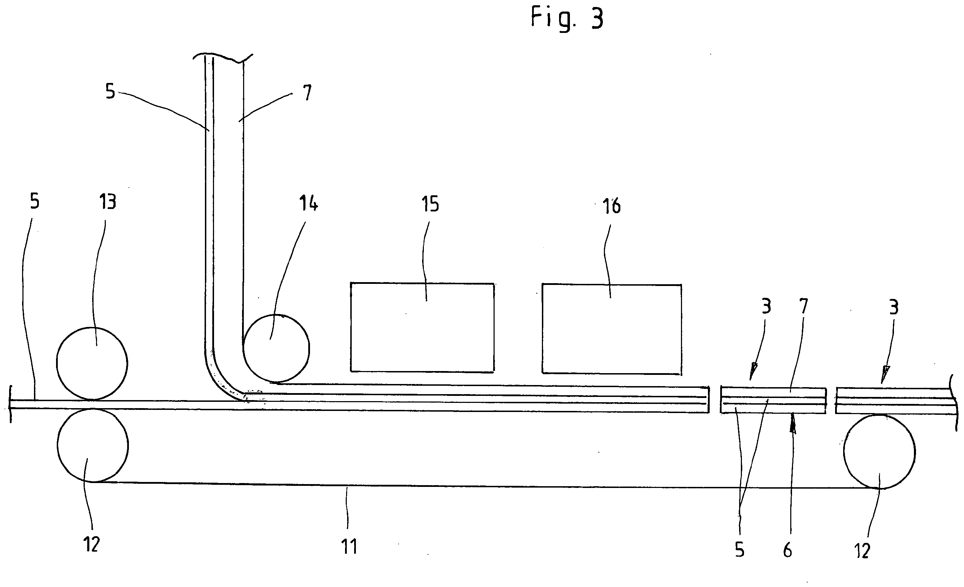

Fig. 3 lässt in rein schematischer Darstellung das Funktionsprinzip der Herstellung erkennen. Mittels eines durch zwei Rollen 12 geführten Laufbandes 11 wird ein erstes Separatorblatt 5 mit Bezug auf die Zeichnungsebene nach Fig. 3 von links nach rechts endlos geführt. Oberseitig sind auf dem Separatorblatt 5 in Laufrichtung voneinander beabstandete Elektrodenplatten angeordnet, die der vereinfachten Darstellung wegen in Fig. 3 nicht dargestellt sind. Zur Ausrichtung des Separatorblattes 5 können eine Mehrzahl von Umlenkrollen 13 vorgesehen sein, von denen beispielhaft nur eine in Fig. 3 dargestellt ist.

Mit Bezug auf die Zeichnungsebene nach Fig. 3 wird dem mit Elektrodenplatten bestückten unteren Separatorblatt 5 von oben über die Umlenkrolle 14 ein weiteres endlos Separatorblatt 5 zugeführt. Dieses Separatorblatt 5 ist mit Bezug auf die Zeichnungsebene nach Fig. 3 oberseitig mit einem Netzgitter 7 bestückt. Dieses Netzgitter ist im gezeigten Ausführungsbeispiel als Flachware ausgestaltet und ebenfalls endlos ausgebildet. Es ist in einem vorangegangenen nicht gezeigten Verfahrensschritt mit dem Separatorblatt 5 verklebt worden.

Über die Umlenkrolle 14 wird das mit dem Netzgitter 7 bestückte Separatorblatt 5 auf das mit Bezug auf die Zeichnungsebene nach Fig. 3 untere Separatorblatt 5 beziehungsweise auf die davon getragenen Elektrodenplatten aufgelegt. Es folgt sodann ein Verschweißen der Separatorblätter 5, und zwar entlang der Längsränder der Elektrodenplatten, das heißt in Richtung der Bewegungsrichtung des Laufbandes 11. Dieser Schweißvorgang wird mittels einer Schweißeinrichtung 15 durchgeführt.

In einem dritten Verfahrensschritt erfolgt dann in der Verarbeitungsstation 16 eine Ablängung der längsverschweißten Separatorblätter 5, wobei stets zwischen zwei beabstandeten Elektrodenplatten abgelängt wird. An der Schnittkante, das heißt Ablängungskante erfolgt dann zwecks Bildung einer Separatortasche 6 ebenfalls eine Verschweißung. Im Ergebnis dieser Verfahrensdurchführung stellen sich negative Elektroden 3 ein, die getascht ausgebildet sind, das heißt innerhalb einer aus Separatormaterial ausgebildeten Separatortasche 6 angeordnet sind, wobei diese Separatortasche 6 auf einer ihrer beiden Großoberflächen ein Netzgitter 7 trägt.

### Bezugszeichenliste

- 1: Akkumulator
- 2: Gehäuse
- 3: negative Elektrode
- 4: positive Elektrode
- 5: Separatorblatt
- 6: Separatortasche
- 7: Netzgitter
- 8: Fahne
- 9: Faden
- 10: Kreuzungspunkte
- 11: Laufband
- 12: Rolle
- 13: Umlenkrolle
- 14: Ablenkrolle
- 15: Schweißeinrichtung
- 16: Verarbeitungsstation
- 17: Dickenrichtung

## Patentansprüche

1. Akkumulator (1) mit einer plattenförmigen positiven Elektrode (4) und einer plattenförmigen negativen Elektrode (3), wobei zwischen den beiden Elektroden (3, 4) ein Separatorblatt (5) und ein aus Polyethylen gebildetes Netzgitter (7) angeordnet sind, wobei das Netzgitter (7) als Abstandshalter dient und aus kreuzweise verlegten und miteinander verschweißten Fäden (9) gebildet ist, wobei der Abstand zwischen zwei Elektroden (3, 4) durch die Dicke von Kreuzungspunkten (10) des Netzgitters (7) bestimmt ist, wobei die Kreuzungspunkte (10) aus den miteinander verschweißten Fäden (9) gebildet sind, **dadurch gekennzeichnet,**
**dass** das Netzgitter (7) als Flächenware nach Art eines Blattes ausgebildet ist, wobei der Abstand zwischen zwei benachbarten Elektroden (3, 4) in Dickenrichtung (17) 1,4 mm bis 2,0 mm, vorzugsweise 1,5 mm bis 1,9 mm, mehr bevorzugt 1,6 mm bis 1,8 mm, am meisten bevorzugt ca. 1,7 mm beträgt.

2. Akkumulator (1) nach Anspruch 1, **dadurch gekennzeichnet, dass** das Netzgitter (7) mit dem Separatorblatt (5) verbunden, vorzugsweise verklebt ist.

3. Akkumulator (1) nach Anspruch 1 oder 2, **dadurch gekennzeichnet, dass** das Separatorblatt (5) eine strukturiert ausgebildete Oberfläche aufweist.

4. Akkumulator (1) nach einem der vorhergehenden Ansprüche, **dadurch gekennzeichnet, dass** das Netzgitter (7) Teil eines Ärmels ist, in dem die eine der beiden Elektroden (3, 4), vorzugsweise die positive Elektrode (4) angeordnet ist.

5. Akkumulator (1) nach einem der vorhergehenden Ansprüche, **dadurch gekennzeichnet, dass** das Separatorblatt (5) aus Polyethylen gebildet ist.

6. Akkumulator (1) nach einem der vorhergehenden Ansprüche, **dadurch gekennzeichnet, dass** das Separatorblatt (5) Teil einer Separatortasche (6) ist, in der die eine der beiden Elektroden (3, 4), vorzugsweise die negative Elektrode (3) angeordnet ist.

7. Akkumulator (1) nach einem der vorhergehenden Ansprüche, **dadurch gekennzeichnet, dass** das Separatorblatt (5) eine Stärke in Dickenrichtung (17) von 0,2 mm bis 0,7 mm, vorzugsweise von 0,25 mm bis 0,5 mm, noch mehr bevorzugt von 0,3 mm bis 0,4 mm, am meisten bevorzugt von 0,35 mm aufweist.

8. Verfahren zur Herstellung eines Akkumulators (1) nach einem der vorhergehenden Ansprüche, bei dem die plattenförmigen negativen Elektroden (3) getascht ausgebildet werden, zu welchem Zweck die Elektroden (3) in einem ersten Schritt oberseitig und unterseitig auf ihren jeweiligen Großoberflächen mit einem endlos ausgebildeten Separatorblatt (5) belegt werden, die Separatorblätter (5) in einem zweiten Schritt entlang der Elektroden (3) verschweißt werden und anschließend in einem dritten Schritt eine Ablängung der Separatorblätter (5) und Verschweißung entlang der Ablängkante erfolgt, wobei zumindest eines der endlos ausgebildeten Separatorblätter (5) entweder in einem vorgeschalteten Verfahrensschritt oder in einem nachgeschalteten Verfahrensschritt mit einem Netzgitter (7) verbunden, vorzugsweise verklebt wird.

## Claims

1. An accumulator (1) comprising a plate-shaped positive electrode (4) and a plate-shaped negative electrode (3), wherein a separator sheet (5) and a grid (7) made of polyethylene are arranged between the two electrodes (3, 4), wherein the grid (7) serves as a spacer and is formed by threads (9) which are laid crosswise and are welded to each other, wherein the distance between two electrodes (3, 4) is determined by the thickness of crossing points (10) of the grid (7), wherein the crossing points (10) are formed by the threads (9) welded to each other,
**characterized in**
**that** the grid (7) is designed as a flat material in form of a sheet, wherein the distance between two adjacent electrodes (3, 4) in the direction of thickness (17) is comprised between 1.4 mm and 2.0 mm, preferably between 1.5 mm and 1.9 mm, more preferably between 1.6 mm and 1.8 mm, and is most preferably around 1.7 mm.

2. An accumulator (1) according to claim 1, **characterized in that** the grid (7) is connected, preferably glued with the separator sheet.

3. An accumulator (1) according to claim 1 or 2, **characterized in that** the separator sheet (5) comprises a surface designed in a structured manner.

4. An accumulator (1) according to one of the preceding claims, **characterized in that** the grid (7) is part of a sleeve, in which the one of the two electrodes (3, 4), preferably the positive electrode (4), is arranged.

5. An accumulator (1) according to one of the preceding claims, **characterized in that** the separator sheet (5) is made of polyethylene.

6. An accumulator (1) according to one of the preceding claims, **characterized in that** the separator sheet (5) is part of a separator pocket (6), in which the one of the electrodes (3, 4), preferably the negative electrode (3), is arranged.

7. An accumulator (1) according to one of the preceding claims, **characterized in that** the separator sheet (5) comprises a thickness in the direction of thickness (17) comprised between 0.2 mm and 0.7 mm, preferably between 0.25 mm and 0.5 mm, more preferably between 0.3 mm and 0.4 mm, most preferably of 0.35 mm.

8. A method for manufacturing an accumulator (1) according to one of the preceding claims, in which the plate-shaped negative electrodes (3) are designed in a pocketed manner, for which purpose an endless separator sheet (5) is applied onto the upper and lower respective large surfaces of the electrodes (3) in a first step, the separator sheets (5) are welded along the electrodes (3) in a second step and afterwards the separator sheets (5) are cut to length and welded along the cutting edge in a third step, wherein at least one of the endless separator sheets (5) is connected, preferably glued with a grid (7) either in an upstream process step or in a downstream process step.

## Revendications

1. Accumulateur (1) comprenant une électrode positive (4) sous forme de plaque et une électrode négative (3) sous forme de plaque, une feuille de séparateur (5) et une grille (7) fabriquée en polyéthylène étant disposées entre les deux électrodes (3, 4), la grille (7) servant d'écarteur et étant formée par des fils (9) disposés en croix et soudés les uns aux autres, la distance entre deux électrodes (3, 4) étant définie par l'épaisseur des points de croisement (10) de la grille (7), les points de croisement (10) étant formés par les fils (9) soudés les uns aux autres,
**caractérisé en ce**
**que** la grille (7) est configurée comme un matériau plat sous forme d'une feuille, la distance entre deux électrodes adjacentes (3, 4) dans la direction d'épaisseur (17) étant comprise entre 1,4 mm et 2,0 mm, de préférence entre 1,5 mm et 1,9 mm, de préférence particulière entre 1,6 mm et 1,8 mm, et de manière la plus préférée étant environ 1,7 mm.

2. Accumulateur (1) selon la revendication 1, **caractérisé en ce que** la grille (7) est reliée à, de préférence collée avec la feuille de séparateur (5).

3. Accumulateur (1) selon la revendication 1 ou la revendication 2, **caractérisé en ce que** la feuille de séparateur (5) comprend une surface configurée de manière structurée.

4. Accumulateur (1) selon l'une des revendications précédentes, **caractérisé en ce que** la grille (7) fait partie d'une manche, dans laquelle est disposée l'une des deux électrodes (3, 4), de préférence l'électrode positive (4).

5. Accumulateur (1) selon l'une des revendications précédentes, **caractérisé en ce que** la feuille de séparateur (5) est fabriquée en polyéthylène.

6. Accumulateur (1) selon l'une des revendications précédentes, **caractérisé en ce que** la feuille de séparateur (5) fait partie d'une poche de séparateur (6), dans laquelle est disposée l'une des deux électrodes (3, 4), de préférence l'électrode négative (3).

7. Accumulateur (1) selon l'une des revendications précédentes, **caractérisé en ce que** la feuille de séparateur (5) comprend une épaisseur dans la direction d'épaisseur (17) comprise entre 0,2 mm et 0,7 mm, de préférence entre 0,25 mm et 0,5 mm, de préférence particulière entre 0,3 mm et 0,4 mm, et de manière la plus préférée étant 0,35 mm.

8. Procédé de fabrication d'un accumulateur (1) selon l'une des revendications précédentes, dans lequel les électrodes négatives (3) sous forme de plaque sont configurées de manière empochée, à quelle fin une feuille de séparateur (5) sans fin est posée sur les faces supérieure et inférieure des surfaces larges respectives des électrodes (3) dans une première étape, les feuilles de séparateur (5) sont soudées le long des électrodes (3) dans une deuxième étape et ensuite les feuilles de séparateur (5) sont coupées à leur longueur et soudées le long du bord coupant dans une troisième étape, au moins l'une des feuilles de séparateur (5) étant reliée à, de préférence collée avec une grille (7) soit dans une étape de procédé en amont soit dans une étape de procédé en aval.
